(19) Europäisches Patentamt
European Patent Office
Office européen des brevets

(11) Veröffentlichungsnummer: **0 328 962 B1**

(12) **EUROPÄISCHE PATENTSCHRIFT**

(45) Veröffentlichungstag der Patentschrift: **07.07.93**

(51) Int. Cl.[5]: **C08F 246/00**, C08F 220/36, C08F 222/04, C09D 123/00

(21) Anmeldenummer: **89101875.6**

(22) Anmeldetag: **03.02.89**

# (54) Isocyanat- und Säureanhydridgruppen enthaltende Copolymerisate, ein Verfahren zu ihrer Herstellung und ihre Verwendung als Bindemittelkomponente.

(30) Priorität: **13.02.88 DE 3804589**

(43) Veröffentlichungstag der Anmeldung:
**23.08.89 Patentblatt 89/34**

(45) Bekanntmachung des Hinweises auf die Patenterteilung:
**07.07.93 Patentblatt 93/27**

(84) Benannte Vertragsstaaten:
**DE FR GB IT NL**

(56) Entgegenhaltungen:
**EP-A- 0 021 015**
**FR-A- 2 197 025**

(73) Patentinhaber: **BAYER AG**
**W-5090 Leverkusen 1 Bayerwerk(DE)**

(72) Erfinder: **Wamprecht, Christian, Dr.**
**Bahnhofstrasse 51**
**W-4040 Neuss 22(DE)**
Erfinder: **Pedain, Josef, Dr.**
**Haferkamp 6**
**W-5000 Köln 80(DE)**
Erfinder: **Blum, Harald, Dr.**
**Auf dem Westkamp 1**
**W-4175 Wachtendonk(DE)**

**EP 0 328 962 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Copolymerisate, die sowohl freie Isocyanatgruppen als auch intramolekulare Säureanhydridgruppen in chemisch eingebauter Form enthalten, ein Verfahren zur Herstellung dieser Copolymerisate und ihre Verwendung als Bindemittelkomponente in Zweikomponenten-Beschichtungsmittel oder -Dichtmassen.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen als Bindemittel für Lacke und Beschichtungsmittel ist bereits bekannt.

Die FR-A-2 392 092 beschreibt Beschichtungskompositionen, bestehend aus hydroxylfunktionellen Polymeren und einem Esteranhydrid mit mindestens zwei Anhydridgruppen pro Molekül, wobei das Esteranhydrid ein Oligomer von Trimellitsäureanhydrid ist. Nachteilig ist dabei die sehr schlechte Löslichkeit der Anhydridkomponente in lacküblichen Lösungsmitteln, sowie die Unverträglichkeit mit dem hydroxylfunktionellen Polymeren.

Die EP-A-48 128 beschreibt eine Beschichtungskomposition bestehend aus einer Hydroxylkomponente mit mindestens zwei Hydroxylgruppen pro Molekül, einer Anhydridkomponente mit mindestens zwei Anhydridgruppen pro Molekül und einer Aminkomponente. Die beschriebene Verwendung von monomeren Aminoalkoholen wie z.B. Triethanolamin als Vernetzungsreagentien wirkt sich sehr nachteilig auf die Lösungsmittelfestigkeit der fertigen Lacke aus, wenn eine ausreichende Standzeit erreicht werden muß. Eine ausreichende Standzeit kann hierbei nämlich nur auf Kosten einer geringen Vernetzungsdichte erzielt werden, wobei Lackfilme erhalten werden, die nicht lösungsmittelbeständig sind. Auch bei Verwendung von höhermolekularen Polyolen wie z.B. hydroxyfunktionellen Polyacrylatharzen ist es kaum möglich, eine für die Praxis ausreichend lange Standzeit der Systeme zu erzielen.

Die Verwendung von Kombinationen aus organischen Verbindungen, insbesondere solchen auf Polymerisatbasis, mit mindestens zwei Isocyanatgruppen pro Molekül und Polyhydroxylverbindungen als Bindemittel für Lacke und Beschichtungen wird beispielsweise in DE-A-2 014 383, US-A-4 219 632, US-A-4 264 748, DE-A-3 004 527, EP-A-130 313 oder EP-A-130 322 beschrieben. Beschichtungen auf Basis dieser Kombinationen besitzen durchweg hervorragende lacktechnische Eigenschaften, jedoch sind diese isocyanatgruppenhaltigen Copolymerisate aufgrund ihrer hohen Isocyanatfunktionalität und ihres hohen Molekulargewichts mit dem Nachteil einer unzureichenden Lagerstabilität behaftet. Besonders in Gegenwart von Luftfeuchtigkeit erfolgt rasch Hydrolyse der Isocyanat- zu Aminogruppen und anschließend sehr schneller Molekulargewichtsaufbau und Viskositätsanstieg bis zur Gelierung.

Es war daher die der Erfindung zugrundeliegende Aufgabe neue, gegenüber Hydroxylgruppen reaktionsfähige Gruppen aufweisende Copolymerisate zur Verfügung zu stellen, die mit organischen Polyhydroxylverbindungen zu hochwertigen, bei Raumtemperatur aushärtenden Bindemitteln vereinigt werden können, die sich durch eine ausreichende Standzeit auszeichnen und die Herstellung von klaren, farblosen, vergilbungsbeständigen und lösungsmittelfesten Überzügen gestatten.

Diese Aufgabe konnte durch die Bereitstellung der nachstehend näher beschriebenen Copolymerisate gelöst werden.

Gegenstand der Erfindung sind Copolymerisate mit einem als Gewichtsmittel bestimmten Molekulargewicht von 1500 bis 75 000 von olefinisch ungesättigten Verbindungen mit chemisch eingebauten, gegenüber Hydroxylgruppen im Sinne einer Additionsreaktion reaktionsfähigen Gruppen, dadurch gekennzeichnet, daß die Copolymerisate als gegenüber Hydroxylgruppen reaktionsfähige Gruppen sowohl

(i) 0,3 bis 7,0 Gew.-% an freien Isocyanatgruppen als auch
(ii) 1 bis 25 Gew.-% an Säureanhydridgruppen (berechnet als $C_4H_2O_3$)

chemisch gebunden enthalten.

Gegenstand der Erfindung ist auch ein Verfahren zur Herstellung dieser Copolymerisate durch Copolymerisation eines Gemischs von olefinisch ungesättigten Verbindungen bei 60 bis 200 °C in Gegenwart von, die Polymerisationsreaktion initiierenden Verbindungen, dadurch gekennzeichnet, daß man ein solches Gemisch an olefinisch ungesättigten Verbindung verwendet, welches neben Isocyanat- und Säureanhydridgruppen-freien Monomeren

(i) olefinisch ungesättigte Säureanhydride und
(ii) olefinisch ungesättigte Isocyanate

in einer solchen Menge enthält, daß in dem Monomerengemisch 0,3 bis 7,0 Gew.-% Isocyanatgruppen und 1 bis 25 Gew.-% Anhydridgruppen (berechnet als $C_4H_2O_3$) vorliegen.

Gegenstand der Erfindung ist schließlich auch die Verwendung dieser Copolymerisate als Bindemittelkomponente in Zweikomponenten-Beschichtungsmitteln oder -Dichtmassen, welche als weitere Bindemittelkomponente organische Polyhydroxylverbindungen enthalten.

Die erfindungsgemäßen Copolymerisate weisen ein, nach der Methode der Gelpermeationschromatographie bestimmbares, Molekulargewicht (Gewichtsmittel) von 1500 bis 75000, vorzugsweise 3000 bis 50000 und besonders bevorzugt von 3000 bis 25000 auf. In den Copolymerisaten liegen sowohl chemisch eingebaute Isocyanatgruppen in einer Menge von 0,3 bis 7,0 Gew.-%, vorzugsweise 0,5 bis 4,0 Gew.-%, als auch chemisch eingebaute intramolekulare Säureanhydridgruppen der Formel

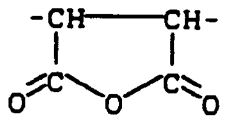

in einer Menge von 1 bis 25 Gew.-%, vorzugsweise 3 bis 15 Gew.-% vor. Es handelt sich bei den Copolymerisaten um solche auf Basis von vorzugsweise einfach olefinisch ungesättigten Monomeren. Zur Herstellung der Copolymerisate, d.h. als Ausgangsmaterialien beim erfindungsgemäßen Verfahren kommen drei Gruppen von olefinisch ungesättigten Monomeren zum Einsatz und zwar a) Isocyanatgruppen enthaltende, olefinisch ungesättigte Monomere, b) intramolekulare Säureanhydridgruppen enthaltende, olefinisch ungesättigte Monomere und c) Isocyanatgruppen- und Säureanhydridgruppen-freie, olefinisch ungesättigte Monomere. Die Monomeren a) werden im allgemeinen in einer Menge von 1 bis 25, vorzugsweise 2 bis 15 Gew.-Teilen, die Monomeren b) in einer Menge von 1 bis 25, vorzugsweise 3 bis 15 Gew.-Teilen und die Monomeren c) in einer Menge von 50 bis 98, vorzugsweise 70 bis 95 Gew.-Teilen eingesetzt, wobei außerdem zu beachten ist, daß die Anteile der einzelnen Monomeren in dem der Copolymerisation zuzuführenden Gemisch so bemessen werden, daß in den Copolymerisaten die obengenannten Mengen an chemisch eingebauten Isocyanat- und Säureanhydridgruppen vorliegen. Der Gehalt der Copolymerisate an diesen Gruppierungen entspricht dem Gehalt des Monomerengemischs an den gleichen Gruppen, da davon ausgegangen werden kann, daß die Copolymerisate bezüglich ihrer chemischen Zusammensetzung der chemischen Zusammensetzung des Monomerengemischs entsprechen.

Bei den Monomeren a) handelt es sich um vorzugsweise einfach olefinisch ungesättigte Mono- oder Polyisocyanate, vorzugsweise Mono- oder Diisocyanate, die vorzugsweise ein Molekulargewicht von 69 bis 400 und aliphatisch oder aromatisch, vorzugsweise aliphatisch gebundene Isocyanatgruppen aufweisen. Gut geeignet sind beispielsweise Isocyanatoethylacrylat, Isocyanatoethylmethacrylat, Bis(2-isocyanatoethyl)-fumarat, m-Isopropenyl-α,α-dimethylbenzylisocyanat, Allylisocyanat, Vinylisocyanat, Methacryloylisocyanat, aber auch Monoaddukte aus polymerisierbaren Hydroxylverbindungen und Diisocyanaten, wie beispielsweise das Umsetzungsprodukt von 1 Mol 1,6-Diisocyanatohexan oder von 1 Mol 1-Isocyanato-3,3,5-trimethyl-5-isocyanatomethyl-cyclohexan mit 1 Mol 2-Hydroxyethylacrylat. Isocyanatoethylmethacrylat, Bis(2-isocyanatoethyl)fumarat und m-Isopropenyl-α,α-dimethylbenzylisocyanat sind bevorzugte Monomere a).

Typische Beispiele für Monomere b) sind z.B. Itaconsäureanhydrid oder Maleinsäureanhydrid, wobei Maleinsäureanhydrid bevorzugt ist.

Die Monomeren c) weisen im allgemeinen ein Molekulargewicht von 86 bis 400 auf. Es handelt sich um die üblichen Isocyanatgruppen- und Säureanhydridgruppen-freien, vorzugsweise einfach olefinisch ungesättigten Monomeren, wie sie auch bereits bei dem Verfahren des obengenannten Standes der Technik als Monomere eingesetzt worden sind. Typische Beispiele sind Ester der Acryl- und Methacrylsäure wie beispielsweise Methylacrylat, Ethylacrylat, n-Butylacrylat, Isobutylacrylat, tert.-Butylacrylat, 2-Ethylhexylacrylat, Cyclohexylmethacrylat, Methylmethacrylat, n-Butylmethacrylat, Isobutylmethacrylat oder 2-Ethylhexylmethacrylat; Vinylaromaten wie beispielsweise Styrol, Vinyltoluol, α-Methylstyrol, α-Ethylstyrol, kernsubstituierte, gegebenenfalls Isomerengemische darstellende Diethylstyrole, Isopropylstyrole, Butylstyrole und Methoxystyrole; Vinylether wie beispielsweise Ethylvinylethr, n-Propylvinylether, Isopropylvinylether, n-Butylvinylether und Isobutylvinylether; Vinylester wie beispielsweise Vinylacetat, Vinylpropionat und Vinylbutyrat.

Bei der Durchführung der Copolymerisation können selbstverständlich jeweils beliebige Gemische der beispielhaft genannten Monomeren a) bis c) verwendet werden.

Die Herstellung der Copolymerisate, d.h. das erfindungsgemäße Verfahren kann durch Copolymerisation der beispielhaft genannten Monomeren a) bis c) nach üblichen radikalischen Polymerisationsverfahren erfolgen, wie beispielsweise Masse- oder Lösungspolymerisation.

Dabei werden die Monomeren bei Temperaturen von 60 bis 200 °C, vorzugsweise 80 bis 160 °C in Gegenwart von vorzugsweise Radikalbildnern und gegebenenfalls Molekulargewichtsreglern copolymerisiert.

Das erfindungsgemäße Verfahren wird vorzugsweise in inerten Lösungsmitteln durchgeführt. Geeignete Lösungsmittel sind beispielsweise Aromaten wie Benzol, Toluol, Xylol, Ester wie Ethylacetat, Butylacetat, Methylglykolacetat, Ethylglykolacetat, Methoxypropylacetat, Ether wie Tetrahydrofuran, Dioxan, Diethylenglykoldimethylether, Ketone wie Aceton, Methylethylketon, Methylisobutylketon.

Das erfindungsgemäße Verfahren kann kontinuierlich oder diskontinuierlich erfolgen. Üblicherweise wird in einem Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter einem Druck von 1 bis 20 bar. Die Initiatoren werden in Mengen von 0,05 bis 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, z.B. Acetyl-, Propionyl- oder Butyrylperoxid, mit Brom-, Nitro-, Methyl- oder Methoxygruppen substituierte Benzoylperoxide, Laurylperoxide; symmetrische Peroxidicarbonate, z.B. Diethyl-, Diisopropyl-, Dicyclohexyl- sowie Dibenzoylperoxidicarbonat; tert.-Butylperoctoat, tert.-Butylperbenzoat oder tert.-Butylphenylperacetat sowie Peroxycarbonate wie z.B. tert.-Butyl-N-(phenylperoxy)-carbonat oder tert.-Butyl-N-(2-, 3- oder 4-chlorphenylperoxy)-carbonat; Hydroperoxide wie beispielsweise tert.-Butylhydroperoxid, Cumolhydroperoxid; Dialkylperoxide wie Di-cumylperoxid; tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisationsreaktion anfallenden Lösungen der Copolymerisate können dann ohne weitere Aufarbeitung der erfindungsgemäßen Verwendung zugeführt werden. Selbstverständlich ist es jedoch auch möglich, die Copolymerisate destillativ vom gegebenenfalls noch vorliegenden Restmengen an nicht umgesetzten Monomeren und Lösungsmittel zu befreien und die als Destillationsrückstand vorliegenden Copolymerisate der erfindungsgemäßen Verwendung zuzuführen.

Die erfindungsgemäßen Copolymerisate stellen wertvolle Bindemittelkomponenten A) für Zweikomponenten-Bindemittel dar. Diese erfindungsgemäßen Bindemittel bestehen neben den Copolymerisaten A) aus organischen Polyhydroxylverbindungen B) und gegebenenfalls, die Additionsreaktion zwischen den Komponenten A) und B) beschleunigende Katalysatoren C), die gegebenenfalls gegenüber Isocyanat- und Säureanhydridgruppen reaktionsfähige Hydroxyl- und/oder Aminogruppen aufweisen, wobei auf jede Isocyanat- und Säureanhydridgruppe der Komponente A) 0,2 bis 5 gegenüber diesen Gruppen reaktionsfähige Gruppen der Komponente B) und gegebenenfalls C) entfallen.

Bei den Polyhydroxylverbindungen B) handelt es sich vorzugsweise um Verbindungen mit mindestens 2 Hydroxylgruppen pro Molekül, wobei vorzugsweise niedermolekulare aliphatische,

cycloaliphatische oder araliphatische Polyole des Molekulargewichtsbereichs 62 bis 500, vorzugsweise 62 bis 400, die 2 bis 6, vorzugsweise 2 bis 4 Hydroxylgruppen pro Molekül enthalten, eingesetzt werden.

Es ist jedoch auch möglich, für spezielle Anwendungsgebiete sogar vorteilhaft, höhermolekulare Polyole des Molekulargewichtsbereiches 500 bis 75000, vorzugsweise 600 bis 50000, die eine OH-Zahl von 20 bis 700, vorzugsweise 25 bis 650 aufweisen, zu verwenden.

Weiterhin können auch Mischungen der zuvor genannten niedermolekularen und höhermolekularen Verbindungen eingesetzt werden. Es können sowohl stickstofffreie Polyhydroxylverbindungen als auch tertiäre Aminstickstoffatome aufweisende Polyhydroxylverbindungen verwendet werden. Im Falle der Verwendung von derartigen Aminoalkoholen erübrigt sich oftmals die Mitverwendung einer weiteren Katalysatorkomponente C), da die eingebauten tert. Aminstickstoffatome der Komponente B) als eingebaute Katalysatoren für die Vernetzungsreaktion wirken.

Geeignete stickstofffreie Polyhydroxylverbindungen sind beispielsweise Ethylenglykol, die isomeren Propandiole, Butandiole, Hexandiole, Neopentylglykol, Cyclohexan-1,4-diol, Cyclohexandimethanol, Bishydroxymethyl-hexahydro-4,7-methano-indan, Polyglykole wie z.B. Diethylenglykol, Triethylenglykol, Polyethylenglykole, Dipropylenglykol, Tripropylenglykol, Polypropylenglykole, Alkantriole wie z.B. Trimethylolpropan und Glycerin, Alkyltetraole wie Pentaerythrit, Umsetzungsprodukte der zuvor genannten Hydroxyl-

verbindungen mit ϵ-Caprolacton, hydroxyfunktionelle Polyester, Polyether und Polyacrylate oder deren Mischungen.

Geeignete tert. Aminstickstoff aufweisende Polyole sind beispielsweise Bis-(2-hydroxyethyl)-methylamin, Bis-(2-hydroxyethyl)-butylamin, Tris-(2-hydroxyethyl)-amin, Tris-2-(2-hydroxyethoxy-ethylamin, Bis-(2-hydroxypropyl)-methylamin, Tris-(2-hydroxypropyl)-amin sowie bevorzugt deren Umsetzungsprodukte mit ϵ-Caprolacton, Umsetzungsprodukte von höher als difunktionellen Polyhydroxylverbindungen der oben beispielhaft genannten Art mit tert. Stickstoffatomen aufweisenden Monoisocyanaten, beispielsweise Umsetzungsprodukte aus (i) 1 Mol N,N-Dimethylethanolamin mit (ii) 1 Mol 1,6-Diisocyanatohexan, 1-Isocyanato-1-methyl-4(3)-isocyanatomethyl-cyclohexan oder Isophorondiisocyanat oder auch tert. Stickstoffatome aufweisende hydroxyfunktionelle Copolymerisate, beispielsweise solche, die unter Mitverwendung von hydroxyfunktionellen Monomeren wie z.B. Hydroxyethylacrylat und von aminofunktionellen Monomeren wie N,N-Diethylaminoethylmethacrylat hergestellt worden sind, mit einem Dialkylamin wie beispielsweise Dimethylamin umgesetzte hydroxy- und epoxyfunktionelle Polymerisate; in gleicher Weise umgesetzte Polyepoxide; Umsetzungsprodukte aus Substanzen mit einer tertiären und mindestens zwei primären bzw. sekundären Aminogruppen mit cyclischen organischen Carbonaten in einem solchen Verhältnis, daß jede primäre bzw. sekundäre Aminogruppe mit einer Carbonatgruppe zur Reaktion gebracht werden kann, z.B. Umsetzungsprodukte aus (i) 1 Mol Bis-(3-aminopropyl)-methylamin und (ii) 2 Mol Ethylencarbonat, Propylencarbonat, Glycerincarbonat oder Alkoxylierungsprodukte von mindestens zwei NH-Bindungen aufweisenden primären und/oder sekundären Mono- oder Polyaminen, wie beispielsweise das Anlagerungsprodukt von 4 bis 5 Mol Propylenoxid an 1 Mol Ethylendiamin oder entsprechend hergestellte, an sich bekannte, höhermolekulare Aminopolyetherpolyole mit eingebauten tert. Stickstoffatomen.

Die Komponente B) kann aus beliebigen Gemischen der beispielhaft genannten stickstoffhaltigen und stickstofffreien Polyhydroxylverbindungen bestehen.

Insbesondere wenn die Komponente B) keine tert. Aminstickstoffatome aufweist empfiehlt sich die Mitverwendung von Katalysatoren C) zur Beschleunigung der zwischen den Isocyanat- und Anhydridgruppen einerseits und den Hydroxylgruppen andererseits ablaufenden Vernetzungsreaktion. Bei diesen Katalysatoren C) handelt es sich um tert. Amine die entweder gegenüber Isocyanat-und Säureanhydridgruppen inert sind oder eine gegenüber diesen Gruppen reaktionsfähige Gruppe (Hydroxylgruppe, primäre oder sekundäre Aminogruppe) aufweisen. Als Katalysatoren C) geeignete Verbindungen sind beispielsweise tert. Amine des Molekulargewichtsbereichs 73 bis 300 wie Ethyldimethylamin, Diethylmethylamin, Triethylamin, Ethyldiisopropylamin, Tributylamin, 1-Methylpyrolidin, 1-Methylpiperidin, 1,4-Dimethylpiperazin, 1,4-Diazabicyclo[(2,2,2)]octan oder 1,8-Diazabicyclo[(5,4,0)]undec-7-en, N,N-Dimethylethanolamin, N,N-Diethylpropanolamin, N,N-Dibutylethanolamin, 1-Amino-3-(dimethylamino)-propan oder 1-Amino-2-(diethylamino)-ethan. Es können auch beliebige Gemische der beispielhaft genannten tert. Amine als Komponente C) eingesetzt werden.

Zur Herstellung der erfindungsgemäßen Bindemittel werden die oben im einzelnen beschriebenen Komponenten, d.h. die Isocyanat- und Anhydridgruppen enthaltenden Copolymerisate A), die Hydroxyl- und gegebenenfalls eine katalytisch wirkende Anzahl an Aminogruppen aufweisende Komponente B) und gegebenenfalls die katalytisch wirkende Komponente C) miteinander vermischt. Es können auch Gemische verschiedener Komponenten A) mit einer oder mehreren Komponenten B) und/oder C) vermischt werden.

Die Mengenverhältnisse zwischen den Komponenten werden hierbei im allgemeinen so gewählt, daß auf jede Isocyanat- und Säureanhydridgruppe der Komponente A) 0,2 bis 5, vorzugsweise 0,5 bis 2 und insbesondere 0,8 bis 1,2 gegenüber diesen Gruppen reaktionsfähige Gruppen der Komponente B), vorzugsweise Hydroxylgruppen, entfallen, wobei in die Berechnung auch gegebenenfalls in der Komponente C) vorliegende Reaktivgruppen einbezogen werden.

Gegebenenfalls in der Komponente C) vorhandene primäre bzw. sekundäre Aminogruppen oder Hydroxylgruppen reagieren spontan mit einem Teil der Isocyanat- und Anhydridgruppen der Komponente A) unter Harnstoff-, Urethan-, Amid- oder Estergruppenbildung ab, so daß diese einbaufähigen Katalysatoren in der letztendlich verbleibenden Beschichtung gebunden werden.

Vor, während oder nach dem Vermischen der Einzelkomponenten können diesen oder den Gemischen inerte Lösungs- und Verdünnungsmittel zugegeben werden. Gegebenenfalls können diese Lösungs- und Verdünnungsmittel auch schon während der Herstellung einer oder mehrerer Ausgangskompomenten zugegeben sein, wie dies z.B. vorstehend beschrieben ist. Die oben beispielhaft genannten Lösungs- bzw. Verdünnungsmittel sind auch zum Lösen bzw. Verdünnen der Einzelkomponenten der Bindemittel bzw. der Bindemittel selbst geeignet.

Die Lösungs- bzw. Verdünnungsmittel werden im allgemeinen in solchen Mengen verwendet, daß die gebrauchsfertigen Bindemittel in Form von 40- bis 80-gew.-%igen Lösungen vorliegen.

Die erfindungsgemäßen, vorzugsweise in inerten Lösungs- bzw. Verdünnungsmitteln gelösten Bindemittel weisen im allgemeinen eine Topfzeit von mehreren Stunden auf und härten bereits bei Raumtemperatur unter gleichzeitigem Verdunsten der gegebenenfalls vorliegenden Lösungsmittel zu Beschichtungen mit hochwertigen mechanischen Eigenschaften aus. Gewünschtenfalls kann diese Trocknung auch durch Temperaturerhöhung auf bis zu 100 °C verkürzt werden, so daß Trocknungszeiten von 10 bis 30 Minuten erreicht werden.

Die erfindungsgemäßen Bindemittel können direkt ohne weitere Zusätze, zur Herstellung von klaren Überzügen verwendet werden. In der Regel werden jedoch die in der Lackindustrie üblichen Hilfs- und Zusatzstoffe, wie Füllstoffe, Verlaufsmittel, Antioxidantien und Mittel zur Adsorption von UV-Licht, sowie Pigmente zugesetzt. Die auf diese Weise erhaltenen, gebrauchsfertigen Zweikomponenten-Systeme können als Beschichtungs- oder Dichtmassen nach bekannten Methoden wie Spritzen, Streichen, Tauchen, Fluten, Gießen, Walzen auf beliebige, gegebenenfalls bereits vorbehandelte Untergründe wie z.B. Metall, Holz, Glas, Keramik, Stein, Beton, Kunststoffe, Textilien, Leder, Pappe und Papier aufgetragen werden.

In den nachfolgenden Beispielen beziehen sich alle Angaben in Prozenten und Teilen, falls nicht anders vermerkt, auf das Gewicht.

I Allgemeine Herstellungsvorschrift für die Isocyanat- und Anhydridgruppen enthaltenden Copolymerisate $A_1$ - $A_7$

In einem 3-l-Reaktionsgefäß mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 2 Stunden) und Teil III (Zugabe über einen Zeitraum von insgesamt 2,5 Stunden) zudosiert. Anschließend wird 2 Stunden bei der Reaktionstemperatur nachgerührt.

Die Reaktionstemperaturen und die Zusammensetzungen der Teile I bis III sind in Tabelle I, zusammen mit den Kenndaten der erhaltenen Copolymerisate aufgeführt.

**Tabelle I** (Mengenangaben in g)

| Copolymerisate | $A_1$ | $A_2$ | $A_3$ | $A_4$ | $A_5$ | $A_6$ | $A_7$ |
|---|---|---|---|---|---|---|---|
| **Teil I** | | | | | | | |
| Butylacetat | 680 | 680 | 680 | | | 680 | 680 |
| Xylol | | | | 600 | 600 | | |
| Bis(isocyanatoethyl)-fumarat | | | | | | 64 | 64 |
| **Teil II** | | | | | | | |
| Cyclohexylmethacrylat | | | | | | | 410 |
| Ethylacrylat | | | | | 336 | | |
| Butylmethacrylat | | | | | 600 | | |
| Butylacrylat | 555 | 504 | 422 | | | | |
| Isobutylacrylat | | | | | | 410 | |
| tert.-Butylacrylat | | | | | | 315 | |
| Isobutylmethacrylat | | | | 532 | | | |
| Methylmethacrylat | 410 | 351 | 493 | | | | |
| 2-Ethylhexylacrylat | | | | 368 | | | |
| Styrol | 58 | 94 | 116 | 190 | 150 | 234 | 212 |
| Maleinsäureanhydrid | 57 | 86 | 82 | 136 | 125 | 148 | 170 |
| Isocyanatoethylmethacrylat | 91 | 136 | 58 | | | | |
| m-Isopropenyl-α,α-dimethylbenzyl-isocyanat | | | | 40 | 55 | | |
| **Teil III** | | | | | | | |
| tert.-Butylperoctoat (70 %ig) | 70 | 70 | 70 | 76 | 76 | 70 | 70 |
| Butylacetat | 79 | 79 | 79 | | | 79 | 79 |
| Xylol | | | | 58 | 58 | | |
| Reaktionstemperatur (°C) | 110 | 110 | 110 | 115 | 115 | 115 | 115 |
| Festgehalt (%) | 59,9 | 59,7 | 59,9 | 64,8 | 65,4 | 59,5 | 59,6 |
| Viskosität (mPa.s, 23°C) | 1139 | 1776 | 3347 | 21255 | 6067 | 3975 | 22708 |
| NCO-Gehalt der Festkörper (%) | 2,0 | 3,1 | 1,3 | 0,6 | 0,9 | 1,8 | 1,8 |
| Anhydridgehalt der Festkörper ($C_4H_2O_3$, %) | 4,7 | 7,2 | 6,8 | 10,5 | 9,6 | 12,3 | 14,2 |

II Herstellverfahren für die Hydroxylgruppen, gegebenenfalls Aminogruppen enthaltenden Komponenten B).

II.1 Herstellung der Ausgangsstoffe

II.1.1 Umsetzungsprodukte aus Diisocyanaten und N,N-Dimethylethanolamin

Produkt $b_1$: Umsetzungsprodukt aus 1-Isocyanato-1-methyl-4(3)-isocyanatomethylcyclohexan und N,N-Dimethylethanolamin.

In einem 1-l-Vierhalskolben mit Rührer, Tropftrichter, Rückflußkühler und Thermometer werden 388 g 1-Isocyanato-1-methyl-4(3)-isocyanatomethylcyclohexan unter Stickstoffatmosphäre vorgelegt. Dann werden bei 25 °C innerhalb 2 Stunden unter Rühren 178 g N,N-Dimethylethanolamin zugetropft. Nach 3 Stunden Rühren bei 25 °C resultiert ein flüssiges, farbloses Umsetzungsprodukt.

Produkt $b_2$: Umsetzungsprodukt aus Isophorondiisocyanat und N,N-Dimethylethanolamin.

Analog Produkt $b_1$ wird ein Umsetzungsprodukt aus 444 g Isophorondiisocyanat und 178 g N,N-Dimethylethanolamin hergestellt.

II.1.2 Umsetzungsprodukte aus Polyolen und ε-Caprolacton

Produkt $b_3$: Umsetzungsprodukt aus Trimethylolpropan und ε-Caprolacton

In einem 1-l-Glaskolben werden 268 g Trimethylolpropan, 456 g ε-Caprolacton und 0,2 g Zinndioctoat 5 Stunden bei 150 °C gerührt. Es resultiert ein farbloses viskoses Produkt mit einer OH-Zahl von 464.

Produkt $b_4$: Umsetzungsprodukt aus Trimethylolpropan und ε-Caprolacton.

Wie bei der Herstellung von Produkt $b_3$ beschrieben werden 402 g Trimethylolpropan und 342 g ε-Caprolacton umgesetzt. Es resultiert ein farbloses viskoses Produkt mit einer OH-Zahl von 677.

Produkt $b_5$: Umsetzungsprodukt aus Glycerin und ε-Caprolacton

Wie bei der Herstellung von Produkt $b_3$ beschrieben werden 368 g Glycerin mit 456 g ε-Caprolacton umgesetzt. Es resultiert ein farbloses viskoses Produkt mit einer OH-Zahl von 815.

II.2 Herstellung der Komponenten B)

Komponente $B_1$: Hergestellt aus Produkt $b_1$ und Produkt $b_3$

In einem 1-l-Glaskolben werden 290 g $b_3$ und 226 g $b_1$ 3 Stunden bei 100 °C gerührt. Es resultiert ein farbloses viskoses Produkt mit einer OH-Zahl von 173.

Komponente $B_2$: Hergestellt aus Produkt $b_2$ und Produkt $b_3$

Analog der Herstellung von Komponente $B_1$ aus 290 g $b_3$ und 249 g $b_2$. Farbloses, viskoses Produkt mit einer OH-Zahl von 166.

Komponente $B_3$: Hergestellt aus Produkt $b_2$ und Produkt $b_4$

Analog der Herstellung von Komponente $B_1$ aus 300 g $b_4$ und 376 g $b_2$. Schwach gelb gefärbtes, viskoses Produkt mit einer OH-Zahl von 200.

Komponente $B_4$: Hergestellt aus Produkt $b_1$ und Produkt $b_5$

Analog der Herstellung von Komponente $B_1$ aus 233 g $b_5$ und 321 g $b_1$. Schwach gelb gefärbtes, viskoses Produkt mit einer OH-Zahl von 229.

Komponente $B_5$: Hergestellt aus Produkt $b_2$ und Produkt $b_5$

Analog der Herstellung von Komponente $B_1$ aus 309 g $b_5$ und 466 g $b_2$. Schwach gelb gefärbtes, viskoses Produkt mit einer OH-Zahl von 216.

Komponente $B_6$: Hergestellt aus Triethanolamin und ε-Caprolacton

In einem 1-l-Glaskolben werden 149 g Triethanolamin und 342 g ε-Caprolacton eingewogen und 4 Stunden bei 140 °C gerührt. Es resultiert ein gelb gefärbtes, viskoses Produkt mit einer Hydroxylzahl von 340.

Komponente $B_7$: Hergestellt aus N-Butyldiethanolamin und ε-Caprolacton

In einem 1-l-Glaskolben werden 161 g N-Butyldiethanolamin und 228 g ε-Caprolacton eingewogen und 3 Stunden bei 140 °C gerührt. Es resultiert ein gelbes, viskoses Produkt mit einer Hydroxylzahl von 288.

Komponente $B_8$: Hergestellt aus Methyl-bis(3-aminopropyl)-amin und Ethylencarbonat

In einem 2-l-Vierhalskolben mit Rührer, Tropftrichter, Rückflußkühler und Thermometer werden 352 g Ethylencarbonat vorgelegt und auf 100 °C aufgeheizt. Unter Rühren werden innerhalb 2 Stunden 290 g Methyl-bis-(3-aminopropyl)-amin zugetropft. Anschließend wird noch 2 Stunden bei 100 °C gerührt. Das entstandene schwach gelb gefärbte Produkt wird mit N-Methylpyrrolidon auf einen Festgehalt von 70 % verdünnt und hat dann eine OH-Zahl von 244.

Komponente $B_9$: Hergestellt aus Methyl-bis(3-aminopropyl)-amin und Propylencarbonat

Analog der Herstellung von Komponente $B_8$ aus 408 g Propylencarbonat und 290 g Methyl-bis(3-aminopropyl)-amin. Das entstandene schwach gelb gefärbte Produkt wird mit Diethylglykoldimethylether auf einen Festgehalt von 70 % verdünnt und hat dann eine OH-Zahl von 232.

Komponente $B_{10}$: Hergestellt aus Methyl-bis(3-aminopropyl)-amin und Glycerincarbonat
Analog der Herstellung von Komponente $B_8$ aus 472 g Glycerincarbonat und 290 g Methyl-bis(3-aminopropyl)-amin. Es resultiert ein schwach gelb gefärbtes viskoses Produkt mit einer OH-Zahl von 588.

Komponente $B_{11}$: Butandiol-1,4

Komponente $B_{12}$: Bis-hydroxymethyl-hexahydro-4,7-methanoindan

III. Herstellung der erfindungsgemäßen Bindemittelkombinationen

Die Isocyanat- und Anhydridgruppen enthaltenden Komponenten A), die Polyolkomponenten B) und gegebenenfalls die Katalysatorkomponente C) (in einigen Beispielen wird N,N-Dimethylethanolamin als Komponente C) verwendet) werden bei Raumtemperatur miteinander vermischt und gegebenenfalls durch Zugabe eines organischen Lösungs- bzw. Verdünnungsmittels auf eine verarbeitungsfähige Viskosität eingestellt. Die Filme werden mit einem Filmzieher auf Glasplatten aufgezogen, wobei die Naßfilmstärke 120 µm beträgt. Die bei Raumtemperatur aufgezogenen Filme waren alle nach spätestens 60 Minuten klebfrei durchgetrocknet. Nach Alterung, d.h. ca. 24 Stunden Trocknung bei Raumtemperatur erhält man klare vernetzte Filme mit hervorragender Filmmechanik.

Die angesetzten Lackmischungen wiesen durchweg eine Standzeit von mehreren Stunden auf.

In der folgenden Tabelle II werden die Zusammensetzungen der Bindemittelkombinationen und die Lösungsmittelfestigkeit als Grad der Vernetzung aufgeführt.

Die Lösungsmittelfestigkeit wird durch einen Wischtest mit einem Methylisobutylketon (MIBK)-getränkten Wattebausch geprüft. Angegeben wird die Anzahl der Doppelhübe, nach denen der Film ohne sichtbare Veränderung bleibt. Mehr als 200 Doppelhübe pro Film wurden nicht durchgeführt.

**Tabelle II**

| Verwendungsbeispiel | 1 | 2 | 3 | 4 | 5 | 6 |
|---|---|---|---|---|---|---|
| Komponente A) | 50,0 g $A_1$ | 50,0 g $A_1$ | 50,0 g $A_1$ | 50,0 g $A_1$ | 50,0 g $A_1$ | 50,0 g $A_1$ |
| Komponente B) | 4,9 g $B_6$ | 5,8 g $B_7$ | 9,6 g $B_1$ | 10,1 g $B_2$ | 8,4 g $B_3$ | 7,8 g $B_5$ |
| Butylacetat | 5,0 g | 5,0 g | 5,0 g | 5,0 g | 5,0 g | 5,0 g |
| Standzeit | >2 h | >2 h | >3 h | >3 h | >3 h | >3 h |
| Aussehen des Films | klar | klar | klar | klar | klar | klar |
| MIBK-Wischtest nach 24 h Raumtemperatur, Anzahl der Doppelhübe: | 150 | >200 | >200 | 190 | 200 | >200 |
| Molverhältnis (NCO + Anhydrid): OH | 1:1 | 1:1 | 1:1 | 1:1 | 1:1 | 1:1 |

Tabelle II (Fortsetzung)

| Verwendungsbeispiel | 7 | 8 | 9 | 10 | 11 | 12 |
|---|---|---|---|---|---|---|
| Komponente A) | 50,0 g $A_2$ | 50,0 g $A_2$ | 50,0 g $A_2$ | 50,0 g $A_2$ | 50,0 g $A_2$ | 50,0 g $A_2$ |
| Komponente B) | 7,2 g $B_6$ | 8,5 g $B_7$ | 14,1 g $B_1$ | 14,7 g $B_2$ | 12,3 g $B_3$ | 11,3 g $B_5$ |
| Butylacetat | 10,0 g | 10,0 g | 10,0 g | 10,0 g | 10,0 g | 10,0 g |
| Standzeit | >2 h | >2 h | >3 h | >3 h | >3 h | >3 h |
| Aussehen des Films | klar | klar | klar | klar | klar | klar |
| MIBK-Wischtest nach 24 h Raumtemperatur, Anzahl der Doppelhübe: | 170 | >200 | >200 | >200 | >200 | >200 |
| Molverhältnis (NCO + Anhydrid): OH | 1:1 | 1:1 | 1:1 | 1:1 | 1:1 | 1:1 |

Tabelle II (Fortsetzung)

| Verwendungsbeispiel | 13 | 14 | 15 | 16 | 17 | 18 |
|---|---|---|---|---|---|---|
| Komponente A) | 50,0 g $A_3$ | 50,0 g $A_3$ | 50,0 g $A_4$ | 50,0 g $A_4$ | 50,0 g $A_5$ | 50,0 g $A_5$ |
| Komponente B) | 2,4 g $B_{12}$ | 1,1 g $B_{11}$ | 10,0 g $B_9$ | 9,2 g $B_8$ | 8,9 g $B_8$ | 10,0 g $B_5$ |
| N,N-Dimethylethanolamin | 0,5 g | 0,5 g | | | | |
| Butylacetat | 5,0 g | 5,0 g | | | | 10,0 g |
| Xylol | | | 5,0 g | 5,0 g | | |
| N-Methylpyrrolidon | | | | | 5,0 g | |
| Standzeit | >3 h | >3 h | >2 h | >2 h | >2 h | >2 h |
| Aussehen des Films | klar | klar | klar | klar | klar | klar |
| MIBK-Wischtest nach 24 h Raumtemperatur, Anzahl der Doppelhübe: | >200 | >200 | 160 | >200 | >200 | 120 |
| Molverhältnis (NCO + Anhydrid): OH | 1:1 | 1:1 | 1:1 | 1:1 | 1:1 | 1:1 |

**Tabelle II** (Fortsetzung)

| Verwendungsbeispiel | 19 | 20 | 21 | 22 |
|---|---|---|---|---|
| Komponente A) | 50,0 g $A_6$ | 50,0 g $A_6$ | 50,0 g $A_7$ | 50,0 g $A_7$ |
| Komponente B) | 13,5 g $B_4$ | 5,3 g $B_{10}$ | 17,0 g $B_4$ | 5,2 g $B_{10}$ |
| Methylethylketon | 15,0 g | | 15,0 g | |
| N-Methylpyrrolidon | | 10,0 g | | 10,0 g |
| Standzeit | >2 h | >2 h | >3 h | >3 h |
| Aussehen des Films | klar | klar | klar | klar |
| MIBK-Wischtest nach 24 h Raumtemperatur, Anzahl der Doppelhübe: | >200 | 180 | >200 | >200 |
| Molverhältnis (NCO + Anhydrid): OH | 1:1 | 1:1 | 1:1 | 1:1 |

## Patentansprüche

1. Copolymerisate mit einem als Gewichtsmittel bestimmten Molekulargewicht von 1500 bis 75 000 von olefinisch ungesättigten Verbindungen mit chemisch eingebauten, gegenüber Hydroxylgruppen im Sinne einer Additionsreaktion reaktionsfähigen Gruppen, dadurch gekennzeichnet, daß die Copolymerisate als gegenüber Hydroxylgruppen reaktionsfähige Gruppen sowohl
   (i) 0,3 bis 7,0 Gew.-% an freien Isocyanatgruppen als auch
   (ii) 1 bis 25 Gew.-% an Säureanhydridgruppen (berechnet als $C_4H_2O_3$)
   chemisch gebunden enthalten.

2. Verfahren zur Herstellung von Copolymerisaten gemäß Anspruch 1 durch Copolymerisation eines Gemischs von olefinisch ungesättigten Verbindungen bei 60 bis 200 °C in Gegenwart von, die

Polymerisationsreaktion initiierenden Verbindungen, dadurch gekennzeichnet, daß man ein solches Gemisch an olefinisch ungesättigten Verbindung verwendet, welches neben Isocyanat- und Säureanhydridgruppen-freien Monomeren

(i) olefinisch ungesättigte Säureanhydride und

(ii) olefinisch ungesättigte Isocyanate

in einer solchen Menge enthält, daß in dem Monomerengemisch 0,3 bis 7,0 Gew.-% Isocyanatgruppen und 1 bis 25 Gew.-% Anhydridgruppen (berechnet als $C_4H_2O_3$) vorliegen.

**3.** Verfahren gemäß Anspruch 2, dadurch gekennzeichnet, daß das der Copolymerisation zuzuführende Monomerengemisch aus

a) 1 bis 25 Gew.-Teilen copolymerisierbaren, isocyanatfunktionellen Monomeren,

b) 1 bis 25 Gew.-Teilen copolymerisierbaren, anhydridfunktionellen Monomeren

und

c) 50 bis 98 Gew.-Teilen Isocyanatgruppen- und Säureanhydridgruppen-freien, gegenüber Isocyanat- und Anhydridgruppen inerten Monomeren

besteht.

**4.** Verfahren gemäß Anspruch 2 und 3, dadurch gekennzeichnet, daß man als isocyanatfunktionelle Monomere Isocyanatoethylmethacrylat, Bis-(2-isocyanatoethyl)-fumarat und/oder m-Isopropenyl-$\alpha$,$\alpha$-dimethylbenzylisocyanat verwendet.

**5.** Verfahren gemäß Anspruch 2 bis 4, dadurch gekennzeichnet, daß man als anhydridfunktionelles Monomer Maleinsäureanhydrid verwendet.

**6.** Verwendung der Copolymerisate gemäß Anspruch 1 als Bindemittelkomponente in Zweikomponenten-Beschichtungsmitteln oder -Dichtmassen, welche als weitere Bindemittelkomponente organische Polyhydroxylverbindungen enthalten.

**7.** Verwendung gemäß Anspruch 6, dadurch gekennzeichnet, daß die Bindemittel aus einem Gemisch aus

A) Copolymerisaten gemäß Anspruch 1,

B) organischen Polyhydroxylverbindungen

und gegebenenfalls

C) die Additionsreaktion zwischen den Komponenten A) und B) beschleunigenden Katalysatoren C), die gegebenenfalls gegenüber Isocyanat- und Säureanhydridgruppen reaktionsfähige Hydroxyl- und/oder Aminogruppen aufweisen,

bestehen, wobei auf jede Isocyanat- und Säureanhydridgruppe der Komponente A) 0,2 bis 5 gegenüber diesen Gruppen reaktionsfähige Gruppen der Komponenten B) und gegebenenfalls C) entfallen.

## Claims

**1.** Copolymers having a weight average molecular weight of from 1500 to 75,000 of olefinically unsaturated compounds containing chemically incorporated groups capable of undergoing an addition reaction with hydroxyl groups, characterised in that the copolymers contain, as hydroxyl reactive groups, both

(i) from 0.3 to 7.0% by weight of free isocyanate groups and

(ii) from 1 to 25% by weight of acid anhydride groups (calculated as $C_4H_2O_3$)

in a chemically bound form.

**2.** Process for the preparation of copolymers according to claim 1 by the copolymerisation of a mixture of olefinically unsaturated compounds at 60 to 200 °C in the presence of compounds which initiate the polymerisation reaction, characterised in that the mixture of olefinically unsaturated compounds used is one which in addition to monomers which are free from isocyanate and acid anhydride groups contains

(i) olefinically unsaturated acid anhydrides and

(ii) olefinically unsaturated isocyanates

in such quantities that the monomer mixture contains from 0.3 to 7.0% by weight of isocyanate groups and from 1 to 25% by weight of anhydride groups (calculated as $C_4H_2O_3$).

**3.** Process according to claim 2, characterised in that the monomer mixture which is to be copolymerised consists of

a) from 1 to 25 parts by weight of copolymerisable, isocyanate functional monomers,
b) from 1 to 25 parts by weight of copolymerisable anhydride functional monomers and
c) from 50 to 98 parts by weight of monomers which are free from isocyanate groups and acid anhydride groups and are inert towards isocyanate and anhydride groups.

**4.** Process according to claims 2 and 3, characterised in that the isocyanate functional monomers used are isocyanatoethyl methacrylate, bis-(2-isocyanatoethyl)-fumarate and/or m-isopropenyl-α,α-dimethylbenzylisocyanate.

**5.** Process according to claims 2 to 4, characterised in that maleic acid anhydride is used as anhydride functional monomer.

**6.** Use of the copolymers according to claim 1 as binder components in two-component coating compounds or sealing compounds which contain organic polyhydroxyl compounds as additional binder components.

**7.** Use according to claim 6, characterised in that the binders consist of a mixture of
A) copolymers according to claim 1,
B) organic polyhydroxyl compounds
and optionally
C) catalysts C) which accelerate the addition reaction between components A) and B) and which optionally contain hydroxyl and/or amino groups which are reactive with isocyanate and acid anhydride groups,
components B) and optionally C) containing from 0.2 to 5 groups which are reactive with isocyanate and acid anhydride groups for each isocyanate and acid anhydride group present in component A).

**Revendications**

**1.** Copolymères ayant un poids moléculaire, déterminé en moyenne en poids, de 1 500 à 75 000, de composés à insaturation oléfinique contenant à l'état chimiquement combiné des groupes actifs dans le sens d'une réaction d'addition avec les groupes hydroxy, caractérisés en ce qu'ils contiennent en tant que groupes réactifs avec les groupes hydroxy, à l'état chimiquement combiné, à la fois
(i) 0,3 à 7,0% en poids de groupes isocyanate libres et
(ii) 1 à 25% en poids de groupes anhydride d'acide (exprimé en $C_4H_2O_3$).

**2.** Procédé de préparation des copolymères de la revendication 1 par copolymérisation d'un mélange de composés à insaturation oléfinique à des températures de 60 à 200°C en présence de composés induisant la réaction de polymérisation, caractérisé en ce que l'on utilise un tel mélange de composés à insaturation oléfinique qui contient, en plus de monomères exempts de groupes isocyanate et de groupes anhydride d'acide,
(i) des anhydrides d'acides à insaturation oléfinique et
(ii) des isocyanates à insaturation oléfinique,
en quantités telles que, dans le mélange de monomères, il y ait de 0,3 à 7,0% en poids de groupes isocyanate et de 1 à 25% en poids de groupes anhydride (exprimé en $C_4H_2O_3$).

**3.** Procédé selon la revendication 2, caractérisé en ce que le mélange de monomères envoyé à la copolymérisation consiste en
a) 1 à 25 parties en poids de monomères copolymérisables à fonctions isocyanate,
b) 1 à 25 parties en poids de monomères copolymérisables à fonctions anhydride et
c) 50 à 98 parties en poids de monomères exempts de groupes isocyanate et de groupes anhydride d'acide et inertes à l'égard des groupes isocyanate et des groupes anhydride.

**4.** Procédé selon les revendications 2 et 3, caractérisé en ce que l'on utilise en tant que monomères à fonctions isocyanate le méthacrylate d'isocyanatoéthyle, le fumarate de bis-(2-isocyanatoéthyle) et/ou l'α,α-diméthylbenzylisocyanate de m-isopropényle.

**5.** Procédé selon les revendications 2 à 4, caractérisé en ce que l'on utilise en tant que monomère à fonction anhydride l'anhydride maléique.

6. Utilisation des copolymères selon la revendication 1, en tant que composants de liants dans des produits de revêtement ou masse d'étanchéité à deux composants contenant, en tant qu'autres composants des liants, des composés organiques polyhydroxylés.

7. Utilisation selon la revendication 6, caractérisée en ce que les liants consistent en un mélange de
   A) des copolymères selon la revendication 1,
   B) des composés organiques polyhydroxylés

   et le cas échéant
   C) des catalyseurs C) accélérant la réaction d'addition entre les composants A) et B) et qui contiennent le cas échéant des groupes hydroxy et/ou amino réactifs avec les groupes isocyanate et anhydride d'acide,

   à raison, pour chaque groupe isocyanate et anhydride d'acide du composant A), de 0,2 à 5 groupes réactifs avec les groupes précédents dans le composant B) et le cas échéant C).